# EUROPEAN PATENT APPLICATION

(11) **EP 1 503 445 A2**
(43) Date of publication of application: **02.02.2005**
(21) Application number: 04254175.5
(22) Date of filing: 13.07.2004
(51) Int. Cl.: H01M 8/12, C04B 41/81

(54) **A doped substrate and method of fabrication**

(30) Priority: 28.07.2003 US 629064
(71) Applicant: Hewlett-Packard Development Company, L.P., Houston, Texas 77070 (US)
(72) Inventor: Herman, Gregory S., Albany, OR 97321 (US); Mardilovich, Peter, Corvalis, OR 97330 (US)
(74) Representative: Tollett, Ian

(57) **Abstract**

A method of applying dopant to a substrate (100) includes selecting at least one desired property of the substrate (100) which should vary across the substrate (100), and variably applying at least one dopant solution to the substrate (100) to provide the desired property which varies across the substrate (100).

## Description

The present invention relates to a method of applying dopant to a substrate, the substrate itself, and to methods and uses for said substrate.

Ceramics have become important to many industries because they possess multiple properties that are controlled by the composition and phase that make them useful in a variety of applications. Such applications range broadly from use as semiconductors protective barriers, thermal barriers, catalysts, selective membranes to use in fuel cells.

During the past several years, the popularity and viability of fuel cells for producing both large and small amounts of electricity has increased significantly. Fuel cells conduct an electrochemical reaction between chemicals such as hydrogen and oxygen to produce electricity and heat. Unlike batteries, which store useable energy, fuel cells,generate useable energy and are more easily "recharged" simply by replenishing the consumed fuel. Moreover, fuel cells are much cleaner and quieter than devices that combust hydrocarbons.

Fuel cells provide a direct current (DC) voltage that may be used to power motors, lights, computers, or any number of electrical appliances. Fuel cells typically have three component parts: an anode, a cathode, and an electrolyte. There are several different types of fuel cells, each using a different chemistry. Fuel cells are usually classified by the type of electrolyte used. There are five principal types of fuel cells: proton exchange membrane (PEM) fuel cells, alkaline fuel cells (AFC), phosphoric-acid fuel cells (PAFC), solid oxide fuel cells (SOFC), and molten carbonate fuel cells (MCFC).

Solid oxide fuel cells are formed as ceramic or ceramic-based substrates that may be processed through the use of tape casters, screen printers, doctor blades, etc. While each of these processing systems vary in their specific mechanisms, each allows for expedited processing of ceramics. Accordingly, fuel cell systems are becoming more economically viable due to the relatively low costs associated with producing these ceramic components.

However, fuel cell systems, like many other heterogeneous systems, may experience decreased efficiency due to the existence of a gradient in the entering gas or liquid phases. For example, fuel cell systems may contain compositional gradients along the electrodes due to changes in the chemical composition of the entering reactant streams as they pass over the electrode. As a result, the efficiency of fuel cell systems may be decreased by non-uniform electrocatalysis and the transfer of ions across the fuel cell.

A method of applying dopant to a substrate includes selecting at least one desired property of the substrate which should vary across the substrate, and variably applying at least one dopant solution to the substrate to provide the desired property which varies across the substrate.

The accompanying drawings illustrate various preferred embodiments of the present invention and are a part of the specification. The illustrated embodiments are merely examples of the present invention and do not limit the scope of the invention.

**Fig. 1A** illustrates a gradient-doped substrate according to one exemplary embodiment.

**Fig. 1B** illustrates a gradient-doped substrate according to one exemplary embodiment.

**Fig. 2** illustrates a gradient dopant application apparatus according to one exemplary embodiment.

**Fig. 3** illustrates a ceramic substrate with multidimensional gradient properties according to one exemplary embodiment.

**Fig. 4** is a flowchart illustrating a gradient dopant processing method according to one exemplary embodiment.

**Fig. 5** illustrates a gradient dopant processing system according to one exemplary embodiment.

**Fig. 6** illustrates a gradient dopant processing system according to one exemplary embodiment.

**Fig. 7** illustrates a gradient dopant processing system according to one exemplary embodiment.

**Fig. 8** illustrates a fuel cell system according to one exemplary embodiment.

Throughout the drawings, identical reference numbers designate similar, but not necessarily identical, elements.

A gradient-doped substrate and a method of variably applying dopant to a substrate are described herein. According to one exemplary implementation more fully described below, a method of applying dopant to a substrate includes providing a substrate, selecting at least one desired property of the substrate, and variably applying a dopant solution to the substrate in order to achieve the desired property. The substrate may be made of, by way of example only, ceramic or ceramic-based materials that are porous or non-porous. Use of the present methods allows for precise control of compositional gradients. Consequently, the control of compositional gradients may be applied to heterogenous systems such as fuel cell systems, membrane reactors, and catalytic reactors by the selective deposition of specific dopants onto substrates. Control over a dopant profile is precise and gradients may be formed in a multitude of directions with several different dopant species. The present system will be described, for ease of explanation only, within the context of a tape casting system. However, the structures and methods described herein may be used with other types of substrate processing systems including, by way of example, screen printing, spin-on deposition, colloidal spray deposition, extrusion, doctor blade methods, etc.

In the following description, for purposes of explanation, numerous specific details are set forth in order to provide a thorough understanding of the present method and apparatus. It will be apparent, however, to one skilled in the art that the present method and apparatus may be practiced without these specific details. Reference in the specification to "one embodiment" or "an embodiment" means that a particular feature, structure, or characteristic described in connection with the embodiment is included in at least one embodiment. The appearance of the phrase "in one embodiment" in various places in the specification are not necessarily all referring to the same embodiment.

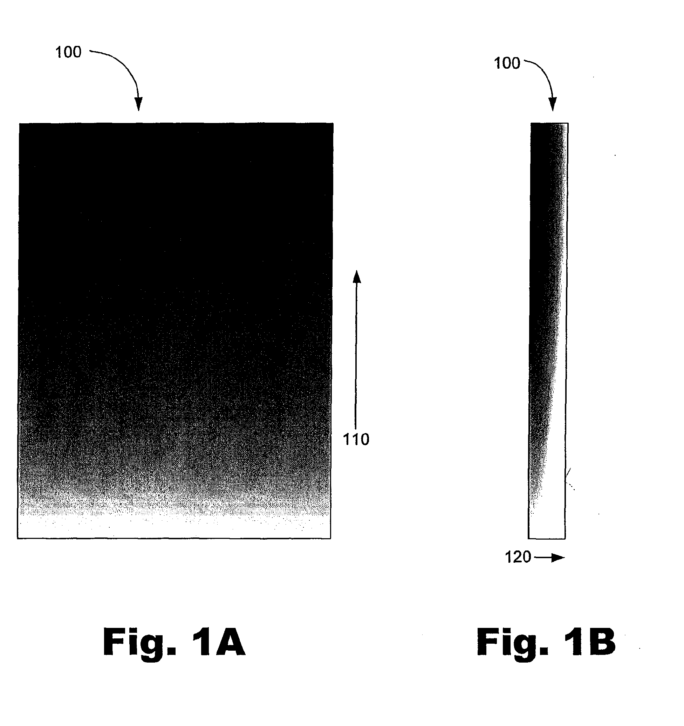

Fig. 1A illustrates a gradient-doped substrate (100), i.e., a substrate in which the concentration of a dopant varies across the substrate. The variation may be a continuous gradient as will be described below. The substrate (100) may be of a ceramic or ceramic-based material or of any other suitable material. The concentration of the applied dopant is represented in the Figures by varying shades of black and gray. A higher concentration of dopant is represented by a darker shade, while a lower concentration of dopant is represented by a lighter shade. In the illustrated implementation, the concentration of dopant applied to the gradient-doped substrate (100) varies with respect to the width (110) of the substrate (100). The dopant can be specific ions that control the ionic conductivity and/or electrocatalytic properties so that a more uniform temperature across the fuel cell or membrane reactor can be obtained to limit thermal stress, or to better utilize the partially reacted fuel or air. Similarly, Fig. 1 B illustrates a side view of gradient-doped substrate (100) in which the concentration of dopant varies both with respect to width (110) and with respect to thickness (120) of the substrate. As used herein, and in the appended claims, an "axis" of a substrate may be any line intersecting the substrate, whether or not parallel to any edge of the substrate. As indicated, the substrate (100) may be, but is not limited to, a ceramic or ceramic based material. Fabrication of the gradient-doped substrate (100) will be discussed in more detail below.

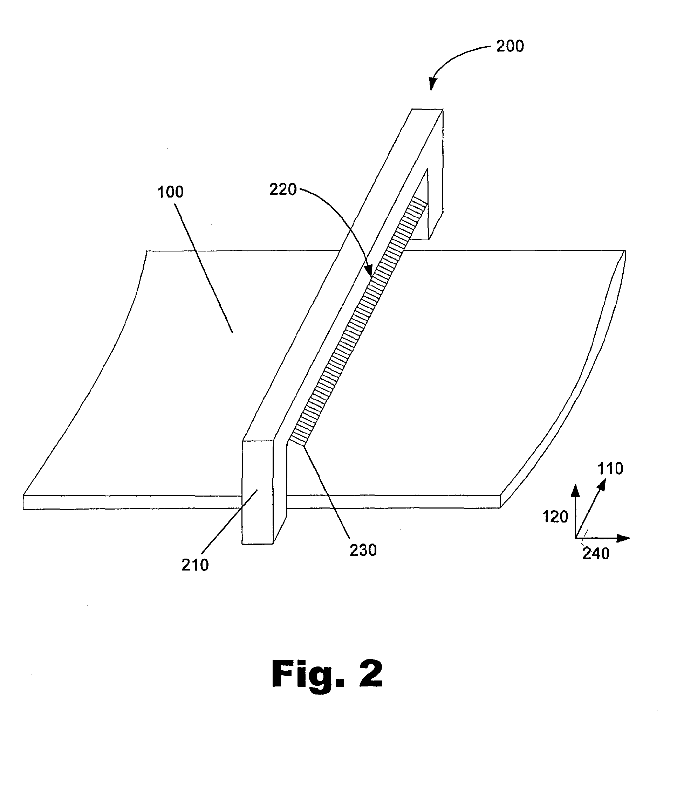

Fig. 2 illustrates a gradient dopant application apparatus (200) that may be used to form a substrate similar to those illustrated in Figs. 1 A and 1 B. The gradient dopant application apparatus (200) may generally include a frame (210) and an array (220) of individual fluid ejection devices (230) that may be coupled to the frame as shown in Fig. 2. These fluid ejection devices (220) may be, or may be similar to, drop-on-demand fluid ejection devices such as inkjets used to eject ink or toner in a printer. Each of the fluid ejection devices (230) is configured to eject a selectively varying amount of dopant to the substrate (100).

During operation of the apparatus (200), a substrate (100) is moved in an advancement direction (240). As the substrate moves past the frame (210) and the array (220), the fluid ejection devices (230) selectively eject a dopant onto the substrate (100). The array (220) of fluid ejection devices (230) can be configured to eject an amount of dopant that varies with respect to the width (110) of the substrate (100). In addition, each of the fluid ejection devices (230) may be configured to eject an amount of dopant that varies as the substrate (100) moves in the advancement direction (240). Accordingly, the gradient dopant application apparatus (200) is configured to apply a gradient dopant application in either the advancement direction (length) (240) and/or the direction of the width (110) of the substrate (100). Multidimensional gradient-doped substrates will be discussed in detail below.

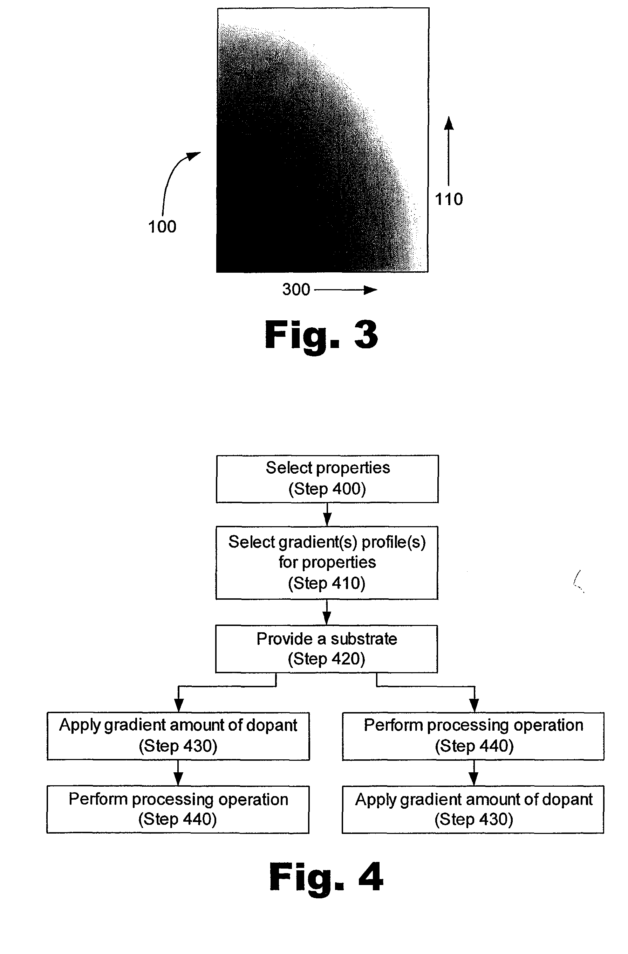

Fig. 3 illustrates a gradient-doped substrate (100) with multidimensional gradient doping. Similar to Fig. 1, the concentration of the applied dopant is represented by varying shades of black and gray: a higher concentration of dopant is represented by a darker shade, while a lower concentration of dopant is represented by a lighter shade. Accordingly, the concentration of the dopant varies both with respect to width (110) and with respect to length (300).

Substrates are doped so as to control or enhance the various properties of the substrate for its intended application. Those of skill in the art will appreciate that more than one property of the substrate may be controlled by applying different dopant species. Thus, by variably applying multiple dopant species, multiple properties of the substrate may be controlled in multiple directions. These properties may include, but are in no way limited to, electrical conductivity, ion conductivity, thermal conductivity, thermal expansion, mechanical properties such as strength and flexibility, catalytic activity, catalytic selectivity, porosity, pore size distribution, and/or density.

One exemplary implementation of the gradient-doped substrate (100; Figs. 1-3) may be fabricated according to the process shown in Fig. 4. The fabrication process begins with the selection of the desired properties that the substrate should have (step 400). These properties will be created through controlled doping the substrate. This may further include mapping different portions of the substrate that will preferably have different properties or varying degrees of a particular property. The result may be referred to as a "properties profile," which describes the different properties the each portion of the substrate should have. This selection of desired properties may be based on the desired properties of the final substrate product or based on other factors such as efficiency considerations.

Once the desired properties have been selected and the properties profile generated, a corresponding dopant gradient profile is generated that will result in the desired properties profile (step 410), i.e., give the substrate the desired properties that may vary across the substrate. Accordingly, the dopant gradient profile specifies the varying concentration of dopant to be added to the substrate to provide the desired properties profile for the substrate. A dopant gradient profile may include a separate dopant gradient profile for each of the dopant species being used.

A possible example of a gradient profile may be a compositional gradient for fuel cell electrodes where the catalytic activity may vary depending on the location of the incoming fuel/oxidant streams. The gradient profile determined for the above situation may be found by closely approximating the necessary concentration of a dopant that affects catalytic activity at a specific location on the substrate. Accordingly, the substrate properties may be precisely controlled to correspond to localized substrate conditions, thereby enhancing the performance of the system. Such systems may include any heterogeneous system where there is a gradient in the composition of gas and/or liquid phases including, but in no way limited to, membrane reactors, catalytic converters, sensors, corrosion resistant materials, etc.

After determining the dopant gradient profile necessary to achieve the desired substrate properties profile, a substrate is provided (step 420). At this point, the substrate (100) has a gradient of dopant applied (step 430, left branch) according to the dopant gradient profile before undergoing a processing operation (step 440, left branch) such as tape casting, screen printing, or doctor blading. Alternatively, the substrate may undergo a processing operation (step 440, right branch) prior to having a gradient of dopant applied according to the dopant gradient profile (step 430, right branch).

Several techniques may be used to vary the doping concentration on the substrate. Such factors may include varying the concentration of the dopant in the dopant solution, varying the viscosity of the ejected solution, varying the length of time between the application of the dopant and curing, applying directional heating, etc. The operation of gradient-doped substrate processing systems will be discussed in further detail below.

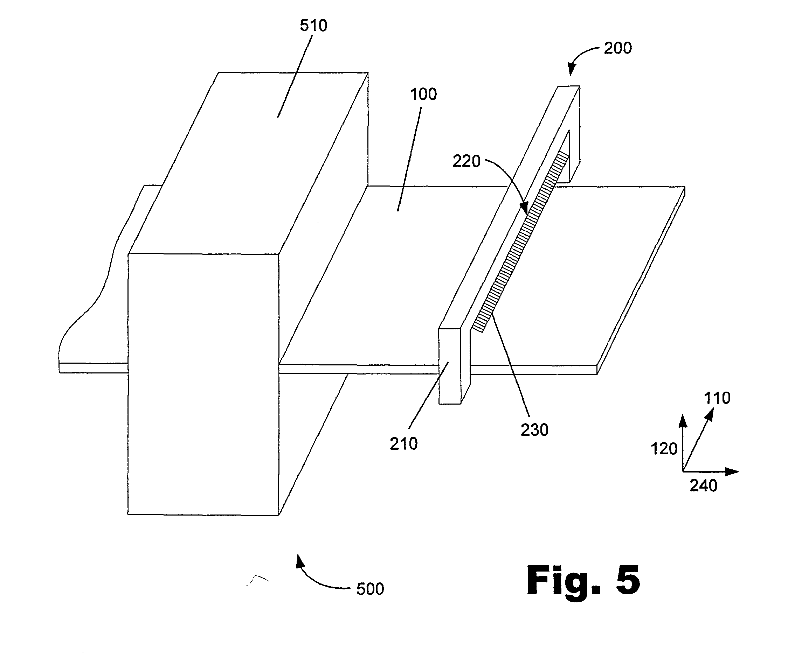

Fig. 5 illustrates the operation of a gradient-doped substrate processing system (500). The system (500) generally includes a processing mechanism (510) and a dopant application apparatus (200), as described above with reference to Fig. 2, that can selectively apply dopant including a gradient of dopant that varies across any dimension of the substrate. The processing mechanism (510) may be, for example, a tape casting mechanism, screen printing mechanism, or doctor blading mechanism. In the illustrated implementation, the processing mechanism (510) is located ahead of a gradient dopant application apparatus (200). Thus, a dopant gradient profile may be established (step 420; Fig. 4) by the gradient dopant application apparatus (200) after the substrate (100) undergoes a processing operation (step 430; Fig. 4) in the processing mechanism (510).

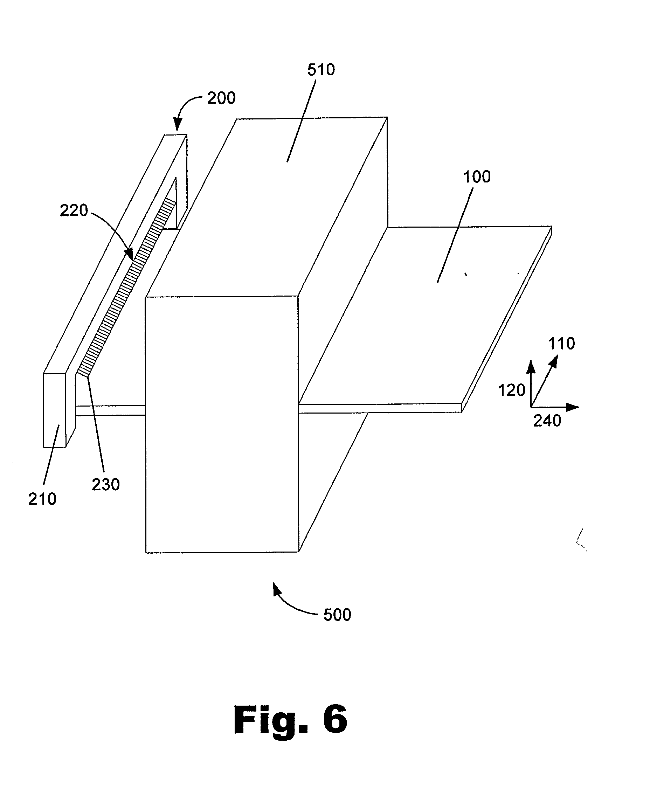

Gradient doping of substrates may improve the efficiency of a wide variety of systems. The ability to use such processes in commonly used processing systems may facilitate the broad use of such processes in industry. Further, the implementation of the gradient dopant application apparatuses (200) in existing substrate processing systems may also facilitate efficient dopant application by minimizing the need to buy new equipment. This minimization may further be enhanced by the ability to mount the gradient dopant application apparatus (200) either ahead of the processing mechanism (as illustrated in Fig. 6) or following the processing mechanism (as in Fig. 5). Several possible systems will be discussed in detail below.

Fig. 6 illustrates a gradient-doping substrate processing system (500) in which the gradient dopant application apparatus (200) is located ahead of the processing mechanism (510). Similarly to Fig. 5, the system (500) generally includes a processing mechanism (510) and a gradient dopant application apparatus (200) as described above with reference to Fig. 2. According to the configuration shown in Fig. 6, the dopant gradient is formed (step 420; Fig. 4) before the substrate (100) undergoes a processing operation (step 430; Fig. 4).

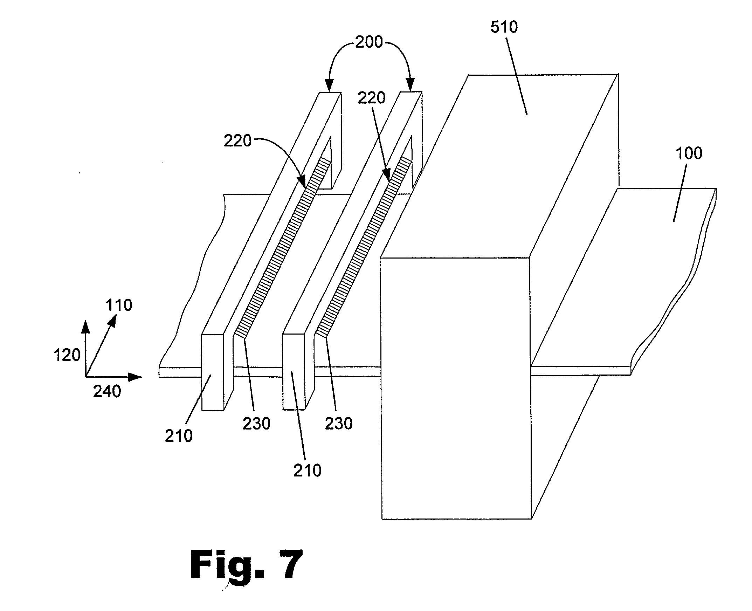

Fig. 7 illustrates a gradient-doping substrate processing system (500) in which two gradient dopant apparatuses (200) are located ahead of the processing mechanism (510). The two gradient dopant application apparatuses (200) are similar to those described above with reference to Fig. 2. Each of the two gradient dopant application apparatuses may apply a different dopant species. Thus, a plurality of dopant gradient profiles may be established (step 420; Fig. 4) by the gradient dopant application apparatuses (200) before the substrate (100) undergoes a processing operation (step 430; Fig. 4) in the processing mechanism (510). As a result, precise control of compositional gradients may be obtained by the selective deposition of specific precursors onto substrates. Control over a dopant profile may be very precise and gradients can be formed in a multitude of directions with several different species. This control may, in turn, allow for improved performance and efficiency in a variety of systems due to the controlled properties profile of the resulting substrate.

Other embodiments (not shown) may make use of any number of gradient dopant application apparatuses (200) located ahead of and/or behind a processing mechanism (510). Further, while the illustrated implementations utilize substrate-wide arrays of inkjet pens to deposit dopants, any other mechanism may be used that provides for the controlled application of a dopant, e.g., liquids, suspensions, gases, etc..

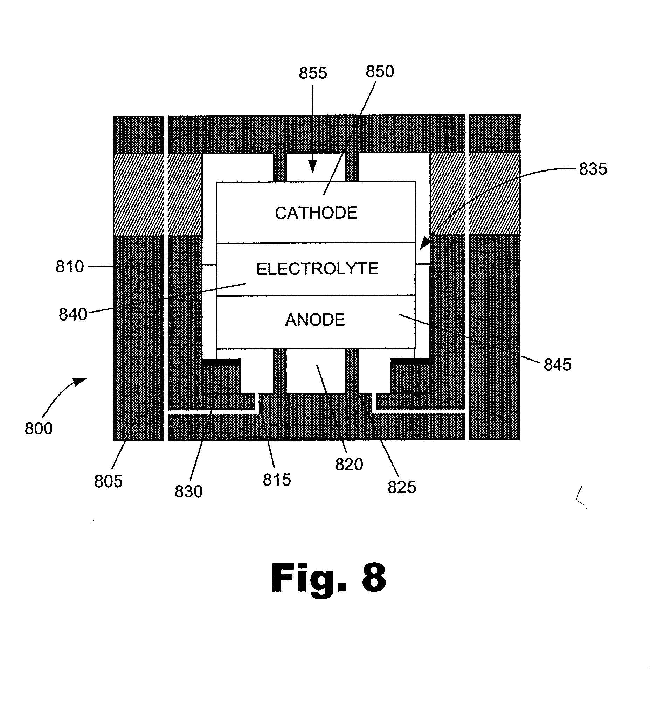

Fig. 8 is an exploded cross-sectional view of an assembled SOFC system (800). As illustrated in Fig. 8, an assembled SOFC system (800) includes an SOFC housing (805) having a number of fuel feed throughs (810), a fuel manifold (815) coupled to each fuel feed through (810), fuel channels (820), a fuel channel extrusion (825), and fuel cell support shelves (830). The fuel manifolds (815) are configured such that they are fluidly coupled to the fuel channels (820).

Seated on top of the fuel channel extrusions (835) and the fuel cell supporting shelves (830) is an SOFC (835). The SOFC (835) shown in Fig. 8 includes an electrolyte (840), an anode (845), and a cathode (850). The anode (845) and cathode (850) may be formed as membranes. The electrolyte (840), located between the anode (845) and the cathode (850), conducts oxygen ions formed at the cathode (850) from air in an air chamber (855) on the cathode side of the SOFC (835) to the anode side where those ions react with the fuel at the anode (845) in the fuel channels (820). Upon reacting with the hydrogen or methane fuel, water (and carbon dioxide in the case of methane) and electricity are produced. The electricity may then be transferred to an external circuit as useable electricity. Thus, the fuel cell may be coupled to an electronic device to provide power for that device.

In the illustrated implementation, a dopant has been variably applied to the cathode side of the SOFC (835) creating a variable dopant profile. The dopant profile has been selected to inversely match the partial pressure of the oxygen in the air entering the air chamber (860). The dopant applied may affect the properties of the cathode including, but in no way limited to, selectivity or catalytic activity. Accordingly, gradient distribution of an applied dopant may enhance ion transfer across an SOFC thereby improving the performance of the fuel cell system. Further, any number of dopant species may be applied to form any number of dopant profiles on the substrate to affect the properties of the anode, the electrolyte, and/or the cathode. In addition, while a dual chamber SOFC is shown, the present methods and apparatus may be used to control the properties of all types of fuel cells and similar systems including but in now way limited to proton exchange membrane (PEM) fuel cells, alkaline fuel cells (AFC), phosphoric-acid fuel cells (PAFC), solid oxide fuel cells (SOFC), and molten carbonate fuel cells (MCFC), membrane reactors, catalytic converters, sensors, corrosion resistance material, etc.

The preceding description has been presented only to illustrate and describe embodiments of invention. It is not intended to be exhaustive or to limit the invention to any precise form disclosed. Many modifications and variations are possible in light of the above teaching. It is intended that the scope of the invention be defined by the following claims.

## Claims

1. A method of applying dopant to a substrate (100), comprising:
selecting at least one desired property of said substrate (100) which should vary across said substrate (100); and
variably applying at least one dopant solution to said substrate (100) to provide said desired property which varies across said substrate (100).

2. A method as claimed in claim 1, wherein said selecting step comprises creating a properties profile defining multiple desired properties of said substrate (100) with respect to different portions of said substrate (100).

3. A method as claimed in claim 1 or 2, wherein said substrate (100) comprises a ceramic.

4. A dopant solution application apparatus (200), comprising:
a frame (210); and
a plurality of fluid ejection devices (230) disposed on said frame (210)
wherein said fluid ejection devices (230) are configured to variably eject a dopant solution onto a substrate (100).

5. A dopant solution application apparatus (200) as claimed in claim 4, further comprising a second plurality of fluid ejection devices (230) disposed on said frame (210) wherein said second plurality of fluid ejection devices (230) is configured to variably apply a second doping solution.

6. A substrate processing system (500), comprising:
a frame (210);
a ceramic formation mechanism associated with said frame (210); and
a plurality of fluid ejection devices (230) with said frame (210), said devices being configured to variably eject at least one dopant solution.

7. A substrate processing system (500) as claimed in claim 6, further comprising a substrate advancement mechanism coupled to said frame (210) and configured to advance said substrate (100) in an advancement direction (240).

8. A gradient-doped substrate, comprising:
a substrate (100) having a first axis;
at least one dopant of said substrate (100), wherein a concentration of said dopant varies along said first axis of said substrate (100).

9. A fuel cell, comprising:
a gradient-doped substrate (100), including
a substrate (100) having a first axis;
at least one dopant of said substrate (100), wherein a concentration of said dopant varies along said first axis; and
an anode (845), a cathode (850), and an electrolyte (840) coupled to said substrate (100).

10. An electronic device comprising:
an electrochemical cell providing power to an electrical power consuming apparatus;
a fuel source for said electrochemical cell; and
a fuel flow path fluidly coupling said electrochemical cell and said fuel source;
wherein said electrochemical cell includes a housing and a fuel cell including an anode (845), a cathode (850), and an electrolyte (840) disposed on a gradient-doped substrate, said fuel cell being located within said housing;
wherein said gradient-doped substrate has a first axis; and
comprises at least one dopant, where a concentration of said dopant varies along said first axis.
